(19) Europäisches Patentamt
European Patent Office
Office européen des brevets

(11) Publication number: **0 046 817 B1**

# (12) EUROPEAN PATENT SPECIFICATION

(45) Date of publication of patent specification: **28.11.84**

(51) Int. Cl.$^3$: **B 01 D 13/04**, A 61 M 1/03

(21) Application number: **80105195.4**

(22) Date of filing: **01.09.80**

## (54) Dry polycarbonate membrane and process of manufacture.

(43) Date of publication of application:
**10.03.82 Bulletin 82/10**

(45) Publication of the grant of the patent:
**28.11.84 Bulletin 84/48**

(84) Designated Contracting States:
**AT BE CH DE FR GB IT LI LU NL SE**

(56) References cited:
EP-A-0 024 600
EP-A-0 044 958
DE-A-2 921 138
FR-A-2 007 782
FR-A-2 200 035
FR-A-2 265 807
FR-A-2 344 315
US-A-4 069 151
US-A-4 075 108
US-A-4 160 791

TRANS. AMER. SOC. ARTIF. INT. ORGANS, vol. XXI, 1975, pages 144-154 B.H. BARBOUR et al.: "Clinical use of NISR 440 polycarbonate membrane for hemodialysis"

(73) Proprietor: **GAMBRO, INC.**
**2387 Kelsey Road**
**Barrington, Ill. 60010 (US)**

(72) Inventor: **Stone, William Jr.**
**P.O. Box 1617**
**Rancho Santa Fe, CA. 92067 (US)**
Inventor: **Cantor, Paul A.**
**4033 Hollyknoll Dr.**
**Los Angeles, CA. 90027 (US)**
Inventor: **Fisher, Bruce S.**
**1564 Wanamaker Dr.**
**Covina, CA. 91724 (US)**
Inventor: **Higley, Willard S.**
**837 Huerta Verde Rd.**
**Glendora, CA. 91740 (US)**

(74) Representative: **Boberg, Nils Gunnar Erik**
**Gambro AB Patent Department Box 10101**
**S-220 10 Lund (SE)**

(56) References cited:
J. MACROMOL. SCI. - CHEM., A4(3), May 1970, pages 655-664 New York, U.S.A. R.E. KESTING: "Control of polymer morphology for biomedical applications. I. Hydrophilic polycarbonate membranes for dialysis"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 046 817 B1

Courier Press, Leamington Spa, England.

**INDUSTRIAL AND ENGINEERING CHEMISTRY: PRODUCT RESEARCH AND DEVELOPMENT, vol. 8, no. 1, March 1969, pages 84-89 Washington, U.S.A. K.D. VOS et al.: "Drying cellulose acetate reverse osmosis membranes"**

## Description

Background of the invention

Polycarbonate membranes for use in hemodialysis have been prepared in accordance with U.S. Patents Nos. 4 069 151, 4 308 145, 4 075 108, and 4 160 791. The disclosure of said U.S. patents is incorporated herein by reference. Please compare also DE—A—2 921 138. According to said U.S. patents, it has been found that water-wet polyether-polycarbonate block copolymer membranes, especially those prepared by a wet phase inversion technique using an aqueous gelation system and having a thickness of from about 15 to about 38 $\mu m$ (from about 0.60 mil to about 1.50 mil) are particularly adapted when incorporated in a hemodialysis apparatus to preferentially remove middle molecular weight molecules (500—5000 Daltons) from blood without raising the water permeability of the membrane. Heretofore said membranes have been manufactured, shipped, and stored in a water-wet form. Experience has shown that these wet membranes suffer a loss of mechanical properties with time. Further, storage stability studies on wet membranes show that while the slope of mechanical properties with time is minimized by refrigerated storage, membrane samples after 11 to 12 months retain about 75% of the original mechanical strength. It is believed that this loss of strength is due to hydrolysis of carbonate linkages causing some chain scission.

The wet membranes have been used clinically in rebuildable dialysers, such as the Kiil dialyser, for a number of years. In this regime, the wet membranes are stored wet in formalin in a refrigerator and consumed within 45 days. More recently, disposable dialysers have been developed in which the membranes are prepackaged within the dialyser. Such dialysers contemplate production in an automatic fashion. The disposable dialysers have a number of advantages, notably convenience and presterilization, and are thus displacing the Kiil dialyser. A dry membrane is more compatible with the production, shipment and storage of disposable dialysers.

It has been found that if the wet membrane is simply allowed to air-dry, it undergoes an irreversible loss of properties, prominent among which are the almost total and rapid loss of the essential ultra-filtration property of the membrane, and major dimensional shrinkage. The subsequent rewetting of an air-dried membrane is totally ineffective in restoring the properties of the original wet membrane.

According to the present invention, it has now been found that dry polyether-polycarbonate block copolymer membranes can be prepared from wet membrane substantially without loss of physical properties or dimensional changes in going from the wet to the dry form, and the dry membrane shows very minimal, if any, loss of strength or change of dimension over extended periods of time even when stored at room temperature. These novel dry membranes have been found to be stable over a wide range of conditions and are heat sealable which permits their ready handling for incorporation in hemodialysis apparatus and permits their use in various dialyser designs (coil, parallel flow, etc.). Still further, the novel dry membranes of this invention have been found, upon being rewet, to retain substantially their original osmotic properties with little or no dimensional, permeability, or strength changes.

Summary of the invention

Briefly, the present invention comprises a substantially dry, flexible, nonwrinkable, stabilized, semipermeable polyether-polycarbonate block copolymer membrane having the ability after being rewetted with water or physiological saline to be used in a hemodialysis apparatus as a means for preferential removal of middle molecular weight molecules from blood, said membrane is containing therein a water-soluble polyol, and said polyetherpolycarbonate block copolymer is containing 5% to 35% by weight of repeating alkylene ether carbonate units and from 95% to 65% by weight of repeating bisphenol A-carbonate units and having a molecular weight within the range of from 50,000 to 750,000 as determined by intrinsic viscosity measurement. The membrane is characterized in that said polyol is contained in an amount from 5% to 65% by weight, preferably from 40% to 55% by weight, based on the total weight of said dry flexible membrane, whereby said polyol has been incorporated into the wet membrane in the form of a solution of the polyol in water and/or a lower alkanol containing 1 to 4 carbon atoms.

This invention also includes the process for manufacturing a substantially dry, stabilized, rewettable semipermeable membrane from a water-wet polyetherpolycarbonate block copolymer membrane of the above-identified kind.

Description of preferred embodiments

In the drawings,

Figure 1 illustrates a membrane drying machine which can be used to prepare the novel dried membranes of this invention.

Figure 2 illustrates the improved results obtained by the practice of the present invention.

Turning to Figure 1 in greater detail, the machine utilizes a wet membrane supply roll 10 at one end and a dry membrane wind-up roll 12 at the other end. Three trays 14, 16 and 18 containing the polyol drying solutions hold immersed rollers 20 and elevated rollers 22 to convey the membrane

through the solutions. A roller 24 directly after the third tray 18 incorporates a rubber squeegee pressing directly on the roll to remove excess drying solution. The final wind-up roll 12 can roll up the dry membrane as free-standing membrane or with a separator film such as siliconized paper from roll 28 wound in. This allows the membrane to be supported on the separator film to which it adheres slightly, making handling of the thin membrane much easier, and prevents wrinkling. Various methods of drying the membrane in the same train prior to final wind-up can be provided including air streams, absorbent rollers 28 and vacuum rollers 30. Alternately, the volatile portions of the drying solutions can be pumped off from the final wound-up membrane using vacuum. In Figure 1, the membrane is generally designed as 32.

The polycarbonate material from which the dry hemodialysis membranes are fabricated in accordance with the present invention is a polyether-polycarbonate block copolymer preferably containing from 5% to 35% by weight of the polyether component. It has been found that this proportion of polyether blocks renders the normally hydrophobic polycarbonate sufficiently hydrophilic so as to make it suitable for use as a hemodialysis membrane. Certain of such block copolymers may be prepared, for example, by the method of Goldberg, *Journal of Polymer Science:* Part C, No. 4, pp. 707—730 (1963), wherein a comonomer mixture of from about 95% to about 65% by weight of 2,2-(4,4′-dihydroxy-diphenyl)propane, generally known as bisphenol A, and correspondingly from about 5% to about 35% by weight of a polyether glycol such as polyethylene glycol, is reacted with a carbonic acid derivative such as phosgene. A polyethylene glycol which is found to be particularly suitable is Carbowax 6000, which is a polyethylene glycol having an average molecular weight of 6700, although polyethylene glycols of other molecular weight can also be used, such as, for example, Carbowax 600, Carbowax 1000 and Carbowax 4000, which are polyethylene glycols having molecular weights of 600, 1000 and 4000, respectively.

In accordance with the above, the polyether-polycarbonate copolymer consists of recurring units of the formula:

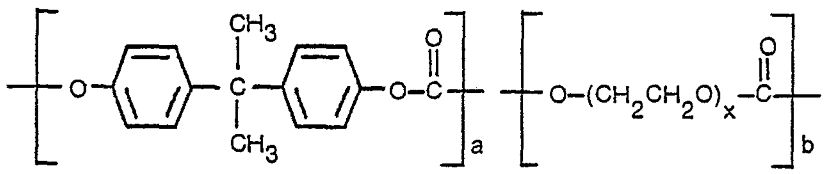

I II

wherein x is from about 12 to about 152 and a and b are chosen such that bisphenol A-carbonate unit (I) is 95% to 65% of the weight of the recurring unit and the alkylene ether carbonate unit (II) is 5% to 35% of the weight of the recurring unit. Polyether glycols other than polyethylene glycols can also be used, such as, for example, polypropylene oxide-polyethylene oxide block copolymers as exemplified by members of the Pluronic® diol series such as Pluronic® F68.

Polyether-polycarbonate block copolymers having molecular weights ranging from 50,000 to 750,000 may suitably be prepared in the above manner. A preferred range of molecular weights is from about 200,000 to about 500,000. The molecular weight is determined by the intrinsic viscosity method. The wet membranes used as the starting material in the present invention may be prepared from casting solutions by dissolving the polyether-polycarbonate block copolymer in a water-miscible organic solvent for the copolymer. The solvent preferably has a boiling point within the range of 50 to 85°C for optimum room temperature casting. The preferred solvent is 1,3-dioxolane which has the appropriate combination of high solvent power for the copolymer, suitable vapor pressure at 25°C, water-miscibility and a boiling point of 75 to 76°C. Other suitable solvents which can be employed include 1,3-dioxan, 1,4-dioxan, tetrahydrofuran, butyrolactone, acetonitrile, cellosolve acetate, dimethylformamide, pyridine and mixtures thereof.

The casting solutions are generally formulated to have a total solids content of from about 1 to about 20 weight percent to give dopes ranging in viscosity from about 5 to about 30 Pa · s (from about 5,000 to about 30,000 cps). Typically, solids contents range from about 10 to about 20 weight percent to give viscosities of from about 7 to about 25 Pa · s (from about 7,000 to about 25,000 cps), the preferred range. A swelling agent, such as dimethyl sulfoxide, dimethylformamide, dimethylacetamide, acetamide, formamide or pyridine is advantageously added to the casting solution in amounts ranging from 10% to about 75% by weight of the copolymer, the preferred range being from about 15% to about 25% by weight of the copolymer. The addition of the swelling agent has been found to enhance the permeability of the resulting membrane.

Production of the wet polycarbonate membrane can be effected on a continuous basis by doctor blade casting of the casting solution onto a moving surface having a smooth finish, such as a coated release paper.

The freshly cast and wet film is allowed to air dry at temperatures ranging from about 20 to about 30°C for periods ranging from about 1.0 to about 5.0 minutes to partially evaporate the solvent therefrom, the drying time being determined by both the belt speed and the drying distance. The

partially dried film is gelled to produce the final membrane by immersion while still adhering to the moving belt, in a water bath. The gelation water bath temperature may be varied between about zero to about 40°C, the preferred range being 20 to 30°C. After gelation, the wet membrane is peeled from the moving belt and rolled up separately from the belt onto a cylindrical core. The wet membrane is finally washed thoroughly with deionized water to remove the last traces of solvent and swelling agent and stored in a sealed plastic bag or other container containing water and a sterilant such as formaldehyde. The final thickness of the wet membrane generally varies from about 15 to 38 μm (from about 0.60 to 1.5 mils), and preferably has a thickness between 15 and 24 (0.60 and 0.95), depending upon the knife gap setting, casting solution viscosity, and belt speed.

In the illustrative examples which are set forth hereinbelow, the wet membrane starting material was obtained in the following manner.

A mixture of 2,860 g of the polyether-polycarbonate block copolymer obtained by reacting phosgene with a comonomer mixture of bisphenol A (75 wt%) and Carbowax 6000 (25 wt%), and having an intrinsic viscosity of 1.57 (in chloroform at 25°C) corresponding to a molecular weight of 320,000, 18,092 g of 1,3-dioxolane and 572.0 g of dimethyl sulfoxide, was slowly agitated until solution was effected (approximately 16 hours). The crude solution was filtered in a pressure filter at $4\times10^5$ Pa (60 psig) through a stainless steel nominal 1.5 μm filter cartridge to remove a small residue of fine insoluble matter. The resulting casting solution has a viscosity of 9.713 Pa·s (9,713 cps) at 25°C. Approximately 19 l (5 gallons) of the above filtered casting solution was cast via a doctor blade onto the surface of a 635 mm (25-inch) wide moving belt moving at a speed of about 0.018 m/s (3.5 feet per minute). The hopper end guides were set to provide a cast film width of 394 mm (15-1/2 inches) (which produces membrane of width suitable for use in the Kiil dialyser), and the gap between the doctor knife and the moving belt surface was set at approximately 175 μm (7.0 mils) and adjusted during production to produce a membrane of final wet thickness of $20\pm1.25$ μm ($0.80\pm0.05$ mils). The casting solution is passed through a shroud 107 cm (42″) long×97 cm (38″) wide×17 cm (6-1/2″) high through which nitrogen at 6.65 $m^3$/h (235 standard cubic feet/hour) is passed. A total drying time for the cast film of about 1.7 minutes was allowed before gelation in a water bath. The ambient air temperature was maintained at $25.0\pm0.5$°C and the gelation water bath temperature at $25\pm0.5$°C. After gelation, the resulting wet membrane was peeled from the moving belt. The wet membrane was washed in a flowing stream of deionized water and can be stored in a sealed polyethylene bag containing 2% aqueous formaldehyde.

The polyol drying agents used to replace the water in the wet polycarbonate membrane are non-toxic ($LD_{50}$ equal to or greater than 500 mg/kg) compounds which are normally liquid at room temperature and included glycerin, propylene glycol, dipropylene glycol, tripropylene glycol and higher polymers of propylene glycol, triethylene glycol, polyethylene glycols which are polymers of ethylene oxide and have the general formula

$$HO{+}CH_2{-}CH_2{-}O{+}_nH$$

where n equals 4 to 20, polymers of propylene oxide having the formula

$$HO{+}\underset{}{\overset{CH_3}{\overset{|}{C}}}H{-}CH_2{-}O{+}_mH$$

where m equals 3 to 20, polyether glycols containing ethylene oxide and propylene oxide units (commonly known as Pluronics®, such as Pluronic® F-68 supplied by BASF-Wyandotte), methoxy derivatives of said polyethylene glycols, sucrose and glucose.

The polyols used in this invention are preferably humectants having a hygroscopicity on the order of glycerin, and are non-volatile at room temperature also on the order of glycerin.

The polyols are also water miscible and preferably miscible in the lower alkanols such as ethanol and isopropanol. This quality of the polyols facilitates the incorporation of the polyol in the membrane, and its subsequent removal at the time of rewetting the membrane for hemodialysis.

The polyols are incorporated into the wet membrane in the form of a solution of the polyol in water and/or a lower alkanol containing 1 to 4 carbon atoms, preferably methyl alcohol, ethyl alcohol, propanol, isopropanol, and mixtures thereof which serve as a carrier for the polyol. It will be appreciated that in the wet membrane starting material, the pores or voids are filled with water. If the water in the pores of the wet membrane were replaced with pure glycerin, for example, this would cause some swelling of the polymer chains and tend to enlarge the pores, producing an undesired increase in the ultrafiltration rate of the subsequently rewetted membrane. To avoid this problem, the polyol is dissolved in water and/or a lower alcohol, typically about 25 to 50 parts by weight of polyol per 75 to 50 parts by weight of the water and/or alkanol carrier.

The water in the wet membrane should be first displaced with the lower alkanol, before contact with the polyol solution. Preferably, this is done in stages as exemplified by trays 14, 16 and 18 where

the initial wet membrane can be first contacted with a water/alkanol mixture, then with pure alkanol, and finally with the polyol/alkanol mixture.

The membrane emerges from tray 18 imbibed with the polyol-water/alkanol solution. The water and alkanol are relatively volatile, and readily evaporate, leaving essentially only the polyol in the pores or voids of the membrane. Any residual water or alkanol is a small amount on the order of 5% to 7% by weight of the dry membrane.

The trays 14, 16 and 18 containing carrier and/or polyol are maintained at about room temperature. The imbibition process occurs quickly, with a preferred residence time in each of the trays of about one to five, and preferably, two minutes.

It has been found that any excess solution on the surface of the membrane as it emerges from the last tray should be physically removed by squeegee, blotter, scraping or vacuum to prevent undesired changes in the properties of the stored dry membrane.

The amount of polyol in the dry membrane is approximately equivalent to that which effectively fills or occupies the voids or pores present in a dialysis membrane, and preferably is from 5% to 65% by weight, based on the total weight of the dry flexible membrane. More preferably, the preferable range is from 40% to 55%.

The dry membrane is quite stable and can be stored for long periods. It can be easily handled, cut, and heat-sealed to itself. Consequently, it is well adapted to the production of disposable dialysers. At the time of use the dry membrane, usually in the form of a prefabricated dialyzer, is contacted with sterile water or physiological saline which rapidly, almost instantaneously, flushes out the polyol, and rewets the membrane. We have found that the rewetted membrane very closely approximates the properties of the original wet membrane, and has a diffusive permeability to sodium chloride of about 650 to 860 $cm/min \times 10^{-4}$, and a diffusive permeability to vitamin $B_{12}$ of greater than 90 $cm/min \times 10^{-4}$, and an ultrafiltration rate generally less than 0.03 $ml/h/m^2/Pa$ (4.0 $ml/h/m^2/mmHg$), both the diffusive permeabilities and ultrafiltration rate measured at 37°C. The rewetted membrane also preferentially removes the middle molecular weight molecules from the blood.

Example 1

A mixture of methyl alcohol, ethyl alcohol and water (5% $H_2O$, 85.5% ethanol, 9.5% methanol) was used as the solvent to carry the glycerine drying agent because of its high volatility and ease in drying. This mixture is referred to as 3A alcohol. The results using glycerine as the drying agent are presented in Table 1. In Table 1, the solution in the trays are separately stated. For example, in Run No. 1, the first tray (tray 14) contained a 50/50% solution of water and 3A alcohol, the second tray (tray 16) contained 100% 3A alcohol, and the third tray (tray 18) contained 62.5/37.5% glycerine dissolved in 3A alcohol.

The ultrafiltration, burst and permeability data reflect the properties of the membrane rewetted with dionized water.

In the Tables, where blanks appear, no data were obtained.

The initial Runs 1 and 2 utilized an additional dry train of supporting rollers wound with absorptive filter-paper as well as a warm air-flow to remove the volatile components of the drying solution prior to wind-up. Plastic squeegee-type scrapers were used on the unsupported membrane directly out of the bath with Runs 1 and 2. Starting with Run 3, siliconized paper was wound in with the dry membrane with the siliconized side against the blood facing layer. This resulted in membrane that had little, if any, wrinkles and the volatile drying solution fractions were removed in a vacuum overnight at room temperature. Runs 4 and 5 were conducted using additional scrapers to remove more drying solution as an aid to the heat-sealing properties of the membranes. Run 6 used a stationary squeegee roller to remove more drying solution. The rotational forces were too great to maintain the roller stationary without stretching the membrane. A smaller degree of membrane wrap around the squeegee roller was required. Run 7 was carried out using 190 proof pure ethanol in place of 3A alcohol as the carrier for glycerine.

The dry membrane can be heat-sealed using an appropriate type heat sealer.

Example 2

Several runs were made on the three-tray drying train using varying concentrations of glycerine humectant and Ultrawet K surfactant (aryl alkylsulfonate potassium salt) in water based drying solutions. The results are presented in Table 2. With membranes 8, 9 and 10, the glycerol concentration was reduced from 50 to 40% and the surfactant concentration from 2 to 1.4%. Essentially the same osmotic properties were obtained as the control. With 35% glycerine, membrane 11, a somewhat lower ultrafiltration (UF) and a somewhat higher NaCl and Vitamin $B_{12}$ permeability was obtained compared to the control. In Run 12, the Ultrawet K was replaced by 2% Triton® X-100, a nonionic surfactant. The dry membranes could be heat-sealed using an appropriate heat sealer.

In all subsequent Examples, the units for ultrafiltration, burst, thickness and permeability are as previously stated.

TABLE 1
Glycerine-ethyl alcohol (3A) based drying solutions
Properties of the dry membrane

| Run No. | Drying solutions Trays 14, 16, 18 | Sticky | Ultrafiltration rate ml/h/Pa/m² (ml/h/mmHg/m²) | Thickness μm(mils) | Burst, Pa (cmHg) | NaCl permeability cm/min×$10^{-4}$ | $B_{12}$ permeability cm/min×$10^{-4}$ | Remarks |
|---|---|---|---|---|---|---|---|---|
| | None—wet control | | 0.0326 (4.33) | 25 (0.99) | 39,600 (29.8) | 823 | 122 | |
| 1 | 50%/50%/$H_2O$/3A alcohol<br>100% 3A alcohol<br>62.5%/37.5% glycerine/ 3A alcohol | Yes | 0.054 (7.2) | | | | | Freestanding membrane roll-up.<br>Squeegee on membrane only. |
| 2 | 50%/50% $H_2O$/3A alcohol<br>100% 3A alcohol<br>40%/60% glycerine/3A alcohol | Slightly | 0.023 (3.0) | | | | | Freestanding membrane roll-up.<br>Squeegee on membrane only. |
| 3 | 50%/50% $H_2O$/3A alcohol<br>100% 3A alcohol<br>62.5%/37.5 glycerine/ 3A alcohol | Slightly | 0.031 (4.1) | 22 (0.87) | 34,700 (26.1) | 685 | 96 | Rolled up with siliconized paper |
| 4 | 50%/50% $H_2O$/3A alcohol<br>100% 3A alcohol<br>58%/42% glycerine/ 3A alcohol | Slightly | 0.029 (3.9) | 24 (0.95) | 38,600 (29.0) | 633 | 91 | Rolled in with siliconized paper.<br>Additional scraper on wet roll. |
| 5 | 50%/50% $H_2O$/3A alcohol<br>100% 3A alcohol<br>58%/42% glycerine/ 3A alcohol | Slightly | 0.033 (4.4) | 25.5 (1.02) | 39,000 (29.3) | 613 | 94 | Rolled in with siliconized paper.<br>Second roller with squeegee on inactive layer. |

TABLE 1 (contd.)
Glycerine-ethyl alcohol (3A) based drying solutions
Properties of the dry membrane

| Run No. | Drying solutions Trays 14, 16, 18 | Sticky | Ultrafiltration rate ml/h/Pa/$m^2$ (ml/h/mmHg/$m^2$) | Thick-ness μm(mils) | Burst, Pa (cmHg) | NaCl permeability cm/min×$10^{-4}$ | $B_{12}$ permeability cm/min×$10^{-4}$ | Remarks |
|---|---|---|---|---|---|---|---|---|
| 6 | 50%/50% $H_2O$/3A alcohol<br>100% 3A alcohol<br>58%/42% glycerine/ 3A alcohol | Slightly | 0.041<br>(5.45) | 24<br>(0.96) | 37,900<br>(28.5) | 811 | 111 | Rolled in with siliconized paper. Stationary squee-gee roller. |
| 7 | 50%/50% $H_2O$/190 Proof pure ethanol<br>100% 190 proof pure ethanol<br>50%/50% glycerine/ 190 proof pure ethanol | Slightly | 0.028<br>(3.7) | | | | 104 | |

TABLE 2
Glycerine-water based drying solutions

| Run No. | Tray 14 | Tray 16* | Tray 18 | Ultrafiltration rate ml/h/Pa/$m^2$ (ml/h/mmHg/$m^2$) | Thickness $\mu$m(mils) | Burst, Pa (cmHg) | NaCl permeability cm/min×$10^{-4}$ | $B_{12}$ permeability cm/min×$10^{-4}$ |
|---|---|---|---|---|---|---|---|---|
| 8 | | 50/50/2 | 50/50/2 | 0.0039 (5.25) | 25 (1.00) | | 796 | 104 |
| 9 | 45/55/1.8 | 45/55/1.8 | 45/55/1.8 | 0.0036 (4.85) | 24.5 (0.98) | 37,345 (28.1) | 783 | 99 |
| 10 | 40/60/1.6 | 40/60/1.6 | 40/60/1.6 | 0.004 (5.0) | 21.3 (0.85) | | 789 | 106 |
| | | Control | | 0.0033 (4.39) | 26.8 (1.07) | | 713 | 104 |
| 11 | 35/65/1.4 | 35/65/1.4 | 35/65/1.4 | 0.003 (4.01) | 26.5 (1.06) | | 753 | 104 |
| | | Control | | 0.0038 (5.04) | 27.5 (1.10) | | 699 | 98 |
| 12 | 100% water | 50/50/2 | — | 0.0021 (2.79) | 31.3 (1.25) | 35,086 (26.4) | 595 | 107 |
| | | Control | | 0.0039 (5.20) | 34.3 (1.37) | 36,415 (27.4) | 731 | 107 |

*Glycerine/$H_2O$/Ultrawet-K (alkyl arylsulfonate potassium salt) on a weight percentage basis.
Approximately three minute residence time/tray.

Example 3

Run 13 was conducted using 3A alcohol as the carrier in the drying solution except for tray 18 where half the alcohol was isopropyl alcohol (IPA). A UF rate of 3.3 was obtained. Run 14 was carried out using a 40/60 glycerine IPA solution with no 3A alcohol in the final solution. This membrane was dried and wound-in with siliconized paper. After the paper ran out, the membrane was wound free-standing on the same roll without a wrinkle. Both the free-standing membrane of Run 14 and the paper-supported (Run 15) membrane gave a lower UF than the previous Run 13. In Run 16, all of the 3A alcohol was replaced with IPA. In the Runs 17 and 18, only the free-standing membrane was tested. Run 17 was tested from the middle of the dry membrane roll which had been supported on siliconized paper. This membrane gave a somewhat greater UF (2.97 vs. 2.4) indicating that the free-standing membrane may have less permeability than the paper-supported membrane in the middle of the roll.

Example 4

Dry membranes 19 and 20 in Table 4 show the effect of tripling the immersion time in the three sequential drying solutions. The osmotic properties of the membranes were increased substantially. Immersion for only three minutes (Run 21) in the third solution (40/60 Glyc/IPA) for varying times (3 to 10 min) showed a trend toward a more open membrane at the longer immersion times.

TABLE 3
Glycerine-IPA based drying solutions

| Run No. | Tray 14 | Tray 16 | Tray 18 | Ultrafiltration rate ml/h/Pa/m² (ml/h/mmHg/m²) | Thickness μm(mils) | NaCl |
|---|---|---|---|---|---|---|
| 13 | $H_2O$/3A Alc. 50/50% | 3A Alc. 100% | Glyc/3A/IPA 40/30/30% | 0.025 (3.3) | 15.8 (0.63) | 743 |
| 14* | $H_2O$/3A Alc. 50/50% | 3A Alc. 100% | Glyc/IPA 40/60% | 0.019 (2.5) | 21.8 (0.87) | 465 |
| 15** | $H_2O$/3A Alc. 50/50% | 3A Alc. 100% | Glyc/IPA 40/60% | 0.020 (2.7) | 22 (0.88) | 641 |
| 16 | $H_2O$/IPA 50/50% | IPA 100% | Glyc/IPA 40/60% | 0.018 (2.4) | 20 (0.80) | |
| 17 | $H_2O$/IPA 50/50% | IPA 100% | Glyc/IPA 40/60% | 0.022 (2.97) | 20.8 (0.83) | |
| | | Control | | 0.039 (5.2) | 28.3 (1.13) | 729 |
| 18 | $H_2O$/IPA 50/50% | IPA 100% | Glyc/IPA 40/60% | 0.025 (3.3) | 21.5 (0.86) | |

*Free-standing membrane
**Siliconized paper-supported membrane from the same run

TABLE 4
Effect of immersion time in IPA based drying solutions
Hand dried membranes

| Dry membrane number | Ultrafiltration rate ml/h/Pa/$m^2$ (ml/h/mmHg/$m^2$) | Thickness $\mu$m(mils) | NaCl | $B_{12}$ | Total Immer. time minutes | Immersion solution |
|---|---|---|---|---|---|---|
| 19 | 0.032 (4.24) | 22.3 (0.89) | 714 | 91 | 9 | 1, 2, 3 |
| 20 | 0.055 (7.34) | 20.3 (0.81) | 770 | 110 | 30 | 1, 2, 3 |
| 21 | 0.023 (3.04) | 19.8 (0.79) | 536 | 69 | 3 | 3 |
| | 0.033 (4.39) | 26.8 (1.07) | 713 | 104 | Control | |

Immersion solutions

| Tray No. 14 | Tray No. 16 | Tray No. 18 |
|---|---|---|
| 50/50% IPA/$H_2O$ | 100% IPA | 40/60% Glyc./IPA |

Example 5

Solutions of glycerol, isopropyl alcohol and water yield dry membranes as measured by UF rates which were essentially unchanged from the control polycarbonate membrane as shown in Table 5. Reducing the glycerol content progressively to 30 and 20% (Runs 23 and 24) along with a reduction in the concentration of IPA to 19 and 13% resulted in a reduction in the UF rate.

Example 6

The dry membrane was stored at room temperature sealed in polyethylene bags on the original rolls of membrane obtained from continuous dry-train runs. Two such membranes were tested for osmotic properties after several weeks storage and the data is presented in Table 6.

Membranes 25 (stored on siliconized paper) and 26 (stored free-standing) were re-tested for UF rate and thickness after 32 and 24 days storage, respectively. The UF rate varied with a narrow limit from —4 to +7% of the original as shown in Table 6. The rewet membrane thickness varied from — to +4%. These results indicate good storage properties of the dry membranes over the indicated time with either the siliconized paper supported or the free-standing membrane.

TABLE 5
Membrane drying studies using IPA carrier
Hand dried membranes

| Membrane number | Drying solution* | Ultrafiltration rate |
|---|---|---|
| 22 | 40/35/25% | 5.3 |
| 23 | 30/51/19% | 2.5 |
| 24 | 20/67/13% | 0.8 |
| | Control | 5.1 |

*Glycerine/$H_2O$/IPA—10 minute immersion. Squeegeed off on siliconized paper and vacuum dried overnight at room temperature.

TABLE 6
Aging studies on dry membrane

| Membrane number | Storage time/ days | Ultrafiltration rate ml/h/Pa/$m^2$ (ml/h/mmHg/$m^2$) Orig. | Ultrafiltration rate Last | Percent of change | Re-wet membrane thickness $\mu$m(mils) Orig. | Re-wet membrane thickness Last | Percent of change |
|---|---|---|---|---|---|---|---|
| 25* | 32 | 0.039 (5.25) | 0.042 (5.62) | +7% | 25 (1.00) | 25 (1.00) | 0 |
| 26** | 24 | 0.036 (4.85) | 0.035 (4.65) | −4% | 24.5 (0.98) | 25.5 (1.02) | +4 |

*Supported on siliconized paper
**Free-standing membrane

Example 7

In this example, polyethylene glycols, polymers of ethylene oxide with the formula

$$HO{+}CH_2{-}CH_2{-}O{+}_nH$$

were used, where n corresponds to a molecular weight of about 200. They are soluble in water and quite stable to hydrolysis. In general, they are somewhat less hygroscopic than glycerine and they. exhibit a very low order of toxicity. At a concentration of 40% in water, polyethylene glycol (E-200) gave a dry membrane with little, if any, plasticized effect. When the concentration of E-200 polyethylene glycol was reduced to 30%, this gave a dry membrane with excellent heat-sealing properties and a UF rate of 1.9. As shown in Run 29, Carbowax 200 also gave satisfactory results.

Example 8

Pluronic® F-68 is a polyethoxylated propylene glycol manufactured by Wyandotte Chemical Company. This particular material has been used extensively over the last ten years in clinical studies in blood, and has a solid history of non-toxicity and blood compatibility. Solutions of F-68 in water and alcohol were used to treat wet membrane samples. The air-dried, treated membranes were rewetted and tested for retention of ultrafiltration properties. The pluronic filled membranes possess a shiny surface, lubricity, and a "dry feel".

TABLE 7
Polyethylene glycol drying solutions

| Membrane number | Drying solution* | Dried film condition | Heat seal | Thickness μm(mils) | Ultrafiltration rate ml/h/Pa/$m^2$ (ml/h/mmHg/$m^2$) |
|---|---|---|---|---|---|
| 27 | None | | Yes | 28.3 (1.13) | 0.057 (7.65) |
| 28 | 40%/60% E-200**/$H_2O$ | Fairly dry | Not quite<br>Fair stretch | 25.5 (1.02) | 0.014 (1.9) |
| 29 | 50%/50% $H_2O$/IPA<br>100% IPA<br>60%/40% Carbowax*** 200/IPA | | | 27.5 (1.1) | 0.073 (9.7) |

*Three minute immersion time
**GAF Gafanol E-200 (Polyethylene glycol having a molecular weight of about 200, available from General Aniline).
***Polyethylene glycol having a molecular weight of about 200, available from Union Carbide.

TABLE 8

| | Ultrafiltration rate, ml/h/Pa/m$^2$ (ml/h/mmHg/m$^2$) | Thickness µm(mils) | P NaCl cm/min x $10^{-4}$ |
|---|---|---|---|
| Control membrane | 0.047 (6.2) | 28.8 (1.15) | 720 |
| 40% Aqueous F-68 treated | 0.034 (4.46) | 28.0 (1.12) | 626 |

Example 9

A stock solution of glycerol/water was placed in an open pan and 15x30 cm (6x12") sheets of wet membrane were immersed in it for ten minute periods. In succession increments of 5% by weight of F-68 were added to the stock solution. Membranes were treated by immersion followed by air drying on a support. The samples of membranes were tested for ultrafiltration characteristic after overnight drying at room temperature. The results are shown below.

TABLE 9

| Percent pluronic® in treating solution | Ultrafiltration rate ml/h/Pa/m$^2$ (ml/h/mmHg/m$^2$) |
|---|---|
| 5 | 0.023 (3.02) |
| 10 | 0.028 (3.66) |
| 15 | 0.025 (3.35) |
| Control | 0.032 (4.3) |

Example 10

The following runs were carried out by hand immersion of the wet membranes in trays of drying solutions. As shown in Table 10, in some cases (Runs 30 and 33) three trays containing progressive amounts of polyol were used. In other cases, a single tray of solution containing the polyol was used. After immersion, the wet membrane was then transferred to siliconized paper, squeegeed free of excess solution, and rolled up between two sheets of siliconized paper and dried in a vacuum oven at room temperature overnight. The data are presented in Table 10. Propylene glycol, sucrose, glucose and triethylene glycol were used as the polyols.

TABLE 10

| Membrane number | Drying solution | Ultrafiltration rate ml/h/Pa/m$^2$ (ml/h/mmHg/m$^2$) | Thick-ness µm(mils) | Burst, Pa (cmHg) | NaCl | $B_{12}$ |
|---|---|---|---|---|---|---|
| 30* | 50/50 $H_2O$/IPA<br>100 IPA<br>60/40 Propylene glycol/IPA | 0.086 (11.4) | 27 (1.08) | 35,750 (26.9) | 905 | 135 |
| 31 | 50/50/2 Sucrose/ $H_2O$/Ultrawet 602 | 0.021 (2.75) | 22.3 (0.89) | 38,142 (28.7) | 595 | 66 |
| 32 | 30/70/0.01 d-glucose/$H_2O$ ultrawet—K | 0.018 (2.4) | 17.5 (0.77) | | | |
| 33 | 100% $H_2O$<br>50/50 triethylene glycol/$H_2O$<br>50/50 triethylene glycol/$H_2O$ | 0.016 (2.1) | 24.8 (0.99) | 34,155 (25.7) | 650 | 77 |

*Membrane 30 indicates excessive swelling of the membrane which can be avoided by using a lesser amount of propylene glycol in the third tray.

Example 11

This example further shows the properties of the novel dry membrane of this invention compared to the previously known wet membrane.

Turning to Figure 2, the membrane of the top or upper curve pertains to a dry membrane prepared as described in Example 2, Membrane 8. The dry membrane was stored at room temperature for 10 weeks. The burst strength properties of the membrane, after immersion in deionized water to rewet the membrane and remove the glycerin, are shown at intervals of 2, 4, 6 and 10 weeks. The UF and NaCl permeability were also measured at the beginning and end of the 10-week period. As can be seen, there was little loss of burst strength, and the UF and NaCl permeability were not substantially changed. The starting thickness of the membrane was 34.8 μm (1.39 mils). The thickness after 10 weeks was 36.8 μm (1.47 mils). Two wet membranes of essentially the same composition as the membrane just discussed, but which were never subjected to the drying procedure, were tested for comparison, each being stored at pH 7 with 2% formalin, and one being stored in a refrigerator at 6°C, and the other being stored first for two weeks in the refrigerator, and thereafter at room temperature at 25°C. The starting and 10-week thicknesses for the membrane stored in the refrigerator were 31.5 μm (1.26 mils) and 32.5 μm (1.30 mils), respectively. The same figures for the room temperature stored membrane were 31.5 μm (1.26 mils) and 33 μm (1.32 mils). The two lower curves show that both wet membranes suffered a substantial decline in burst strength over the 10-week test period. These data demonstrate the improved results provided by the practice of this invention.

## Claims

1. Substantially dry, flexible, nonwrinkled, stabilized semipermeable polyether-polycarbonate block copolymer membrane having the ability after being rewetted with water or physiological saline to be used in a hemodialysis apparatus as a means for preferential removal of middle molecular weight molecules from blood, said membrane is containing therein a water-soluble polyol, and said polyether-polycarbonate block copolymer is containing 5% to 35% by weight of repeating alkylene ether carbonate units and from 95% to 65% by weight of repeating bisphenol A-carbonate units and having a molecular weight within the range of from 50,000 to 750,000 as determined by intrinsic viscosity measurement, characterized in that said polyol is contained in an amount from 5% to 65% by weight, preferably from 40% to 55% by weight, based on the total weight of said flexible membrane, whereby said polyol has been incorporated into the wet membrane in the form of a solution of the polyol in water and/or a lower alkanol containing 1 to 4 carbon atoms.

2. The membrane of claim 1, characterized in that after being rewetted said membrane has a diffusive permeability to sodium chloride of about 650 to 860 cm/min$\times 10^{-4}$, a diffusive permeability to vitamin $B_{12}$ of greater than 90 cm/min$\times 10^{-4}$, an ultrafiltration rate of less than 0.03 ml/h/m$^2$/Pa (4.0 ml/h/m$^2$mmHg), both the diffusive permeability and ultrafiltration rate being measured at 37°C, and a thickness from about 15 μm (0.60 mil) to about 38 μm (1.5 mil).

3. The membrane of claim 1 or 2, characterized in that said polyol is chosen among glycerine, propylene glycol, dipropylene glycol, tripropylene glycol and higher polymers of propylene glycol, triethylene glycol, polyethylene glycols which are polymers of ethylene oxide and have the general formula

$$HO—(CH_2—CH_2—O)_n—H$$

where n equals 4 to 20, polymers of propylene oxide having the formula

$$HO\text{+}\underset{}{\overset{CH_3}{\overset{|}{C}}}H—CH_2—O\text{+}_mH$$

where m equals 3 to 20, polyether glycols containing ethylene oxide and propylene oxide units, methoxy derivatives of said polyethylene glycols, sucrose and glucose.

4. A process for manufacturing a substantially dry, stabilized, non-wrinkled, semipermeable polyetherpolycarbonate block copolymer membrane according to claim 1, characterized by incorporating the polyol into the water-wet membrane in the form of a solution of the polyol in water and/or a lower alkanol containing 1 to 4 carbon atoms, and by volatilizing substantially all of said water and/or said lower alkanol from said membrane while leaving the polyol in the membrane in an amount of from 5% to 65% by weight, preferably from 40% to 55% by weight, based on the total weight of said dry membrane.

5. The process of claim 4, characterized in that the lower alkanol are chosen among methyl alcohol, ethyl alcohol, propanol, isopropanol, and mixtures thereof.

6. The process of claim 4 or 5, characterized in that any excess of said solution present on the surface of the imbibed membrane is physically removed prior to said volatilization.

7. The process of claim 5 or 6, characterized in that said imbibing is carried out by first replacing

the water in the membrane with a lower alkanol and then imbibing into the membrane a solution of polyol dissolved in a lower-alkanol.

8. The process of claim 5 or 6, characterized in that said imbibing is carried out by first replacing the water in the membrane with a solution of water and the lower alkanol, then replacing the solution of water and the lower alkanol with pure alkanol, and then imbibing into the membrane a solution of the polyol dissolved in a lower alkanol.

9. The process of any of claims 4—8, characterized in that said polyol is chosen among glycerine, propylene glycol, dipropylene glycol, tripropylene glycol and higher polymers of propylene glycol, triethylene glycol, polyethylene glycols which are polymers of ethylene oxide and have the general formula

$$HO{+}CH_2{-}CH_2{-}O{+_n}H$$

where n equals 4 to 20, polymers of propylene oxide having the formula

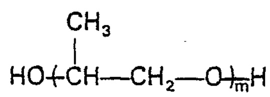

where m equals 3 to 20, polyether glycols containing ethylene oxide and propylene oxide units, methoxy derivatives of said polyethylene glycols, sucrose and glucose.

**Revendications**

1. Membrane effectivement sèche, flexible, non-plissée, stabilisée, semiperméable, d'un copolymère bloc de polyéther-polycarbonate, qui peut, après avoir été remouillée avec de l'eau ou du sérum physiologique, être utilisée dans un appareil d'hémodialyse comme moyen pour retirer du sang, de façon préférentielle les molécules de poids moléculaire médian, ladite membrane contenant un polyol soluble dans l'eau et ledit copolymère bloc de polyéther-polycarbonate contenant 5 à 35% en poids de motifs récurrents alkylène éther-carbonate et 95 à 65% en poids de motifs récurrents bis-phénol A-carbonate, et ayant un poids moléculaire compris entre 50.000 et 750.000, tel que déterminé par des mesures de viscosité interne, ladite membrane étant caractérisée en ce qu'elle contient ledit polyol dans la proportion de 5 à 65% en poids, de préférence de 40 à 55% en poids, par rapport au poids total de la membrane sèche et flexible, ledit polyol ayant été incorporé dans la membrane mouillée sous forme d'une solution du polyol dans l'eau et/ou un alcanol inférieur contenant 1 à 4 atomes de carbone.

2. Membrane selon la revendication 1, caractérisé en ce qu'après avoir été remouillée, elle présente une perméabilité par diffusion au chlorure de sodium d'environ 650 à 850 cm/mn$\times 10^{-4}$, une vitesse d'ultrafiltration inférieure à 0,03 ml/h/m$^2$/Pa (4,0 ml/h/m$^2$/mmHg), la perméabilité par diffusion et la vitesse d'ultrafiltration étant toutes deux mesurées à 37°C, et une épaisseur d'environ 15 $\mu$m à 38 $\mu$m.

3. Membrane selon l'une des revendications 1 et 2, caractérisée en ce que le polyol appartient au groupe de la glycérine, du propylène glycol, du dipropylène glycol, du tripropylène glycol et des polymères supérieurs du propylène glycol, du triéthylène glycol, des polyéthylène glycols qui sont des polymères de l'oxyde d'éthylène de formule générale

$$HO{-}(CH_2{-}CH_2{-}O)_n{-}H,$$

où n=4 à 20, des polymères de l'oxyde de propylène de formule

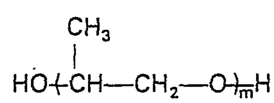

où n=3 à 20, des polyéthers glycols contenant des motifs oxyde d'éthylène et oxyde de propylène, des dérivés méthoxy desdits polyéthylène glycols, du sucrose et du glucose.

4. Procédé pour la fabrication d'une membrane effectivement sèche, stabilisée, non plissée, semiperméable d'un copolymère bloc de polyéther-polycarbonate selon la revendication 1, caractérisé en ce qu'on incorpore le polyol dans la membrane mouillée à l'eau sous la forme d'une solution du polyol dans l'eau et/ou un alcanol inférieur contenant 1 à 4 atomes de carbone, et on volatilise pratiquement toute l'eau et/ou l'alcanol inférieur, de la membrane, tout en laissant subsister le polyol dans la membrane dans la proportion de 5 à 65% en poids, de préférence 40 à 55% en poids, par rapport au poids total de la membrane sèche.

5. Procédé selon la revendication 4, caractérisé en ce que l'alcanol inférieur appartient au groupe de l'alcool méthylique, de l'alcool éthylique, du propanol, de l'isopropanol et de leurs mélanges.

6. Procédé selon l'une des revendications 4 et 5, caractérisé en ce que tout excès de ladite solution, présente sur la surface de la membrane imbibée, est physiquement enlevée avant ladite volatilisation.

7. Procédé selon l'une des revendications 5 et 6, caractérisé en ce qu'on effectue ladite imbibition en remplaçant d'abord l'eau dans la membrane par un alcanol inférieur, puis en imbibant la membrane d'une solution du polyol dissous dans un alcanol inférieur.

8. Procédé selon l'une des revendications 5 et 6, caractérisé en ce qu'on effectue ladite imbibition en remplaçant d'abord l'eau dans la membrane par une solution d'eau et de l'alcanol inférieur, puis en remplaçant la solution d'eau et de l'alcanol inférieur par l'alcanol pur, puis en imbibant la membrane d'une solution du polyol dissous dans un alcanol inférieur.

9. Procédé selon l'une des revendications 4 à 8, caractérisé en ce que ledit polyol appartient au groupe de la glycérine, des propylène glycol, dipropylène glycol, tripropylène glycol, et des polymères supérieurs du propylène glycol, du triéthylène glycol des polyéthylène glycols qui sont des polymède l'oxyde d'éthylène, de formule générale

$$HO(CH_2—CH_2O)_nH$$

où n=4 à 20, des polymères de l'oxyde de propylène, de formule

$$HO(CH(CH_3)—CH_2—O)_mH$$

où n=3 à 20, des polyéthers glycols contenant des motifs oxyde d'éthylène et oxyde de propylène, des dérivés méthoxy desdits polyéthylène glycols, du sucrose et du glucose.

**Patentansprüche**

1. Im wesentlichen trockene, flexible, nicht-runzlinge, stabilisierte semipermeable Polyäther-Polycarbonat-Blockmischpolymermembran mit der Fähigkeit, nach dem Wiederbefeuchten mit Wasser oder physiologischer Kochsalzlösung in einer Hämpodialyseapparatur als Mittel zur bevorzugten Entfernung von Molekülen mittleren Molekulargewichts aus Blut verwendet zu werden, wobei die Membran ein wasserlösliches Polyol enthält und das Polyäther-Polycarbonat-Blockmischpolymer 5 bis 35 Gewichts-% sich wiederholender Alkylenäthercarbonateinheiten und 95 bis 65 Gewichts-% sich wiederholender Bisphenol-A-carbonateinheiten enthält und ein Molekulargewicht im Bereich von 50 000 bis 750 000, bestimmt durch Grundviskositätsmessung, besitzt, dadurch gekennzeichnet, daß das Polyol in einer Menge von 5 bis 65 Gewichts-%, vorzugsweise von 40 bis 55 Gewichts-%, bezogen auf das Gesamtgewicht der flexiblen Membran, enthalten ist, wobei dieses Polyol in die feuchte Membran in der Form einer Lösung des Polyols in Wasser und/oder in einem niedermolekularen Alkanol mit 1 bis 4 Kohlenstoffatomen eingearbeitet wurde.

2. Membran nach Anspruch 1, dadurch gekennzeichnet, daß die Membran nach dem Wiederbefeuchten eine Diffusionspermeabilität für Natriumchlorid von etwa 650 bis 860 $cm/min/\times 10^{-4}$, eine Diffusionspermeabilität für Vitamin $B_{12}$ von mehr als 90 $cm/min \times 10^{-4}$, eine Ultrafiltrationsgeschwindigkeit von weniger als 0,03 $ml/h/m^2/Pa$ (4,0 $ml/h/m^2/mmHg$) hat, wobei die Diffusionspermeabilität und Ultrafiltrationsgeschwindigkeit bei 37°C gemessen werden, und eine Dicke von 15 $\mu m$ (0,60 Mil) bis etwa 38 $\mu m$ (1,5 Mil) hat.

3. Membran nach Anspruch 1 oder 2, dadurch gekennzeichnet, daß das Polyol aus der Gruppe Glycerin, Propylenglycol, Dipropylenglycol, Tripropylenglycol und höherer Polymere von Propylenglycol, Triäthylenglycol, Polyäthylenglycolen, die Polymere von Äthylenoxid sind und die allgemeine Formel

$$HO—(CH_2—CH_2—O)_n—H$$

haben, worin n 4 bis 20 bedeutet, von Polymeren von Propylenoxid der Formel

$$HO(CH(CH_3)—CH_2—O)_mH$$

worin m 3 bis 20 bedeutet, Polyätherglycolen, die Äthylenoxid- und Propylenoxideinheiten enthalten, Methoxyderivaten dieser Polyäthylenglycole, Saccharose und Glucose ausgewählt ist.

4. Verfahren zur Herstellung einer im wesentlichen trockenen, stabilisierten, nicht-runzligen, semipermeablen Polyäther-Polycarbonat-Blockmischpolymermembran nach Anspruch 1, dadurch gekennzeichnet, daß man das Polyol in die wasserfeuchte Membran in der Form einer Lösung des Polyols in Wasser und/oder in einem niedermolekularen Alkanol mit 1 bis 4 Kohlenstoffatomen einarbeitet und im wesentlichen das gesamte Wasser und/oder das gesamte niedermolekulare Alkanol aus der Membran

verdampft, während das Polyol in der Membran in einer Menge von 5 bis 65 Gewichts-%, vorzugsweise von 40 bis 55 Gewichts-%, bezogen auf das Gesamtgewicht der trockenen Membran, zurückgelassen wird.

5. Verfahren nach Anspruch 4, dadurch gekennżeichnet, daß das niedermolekulare Alkanol aus der Gruppe Methylakohol, Äthylalkohol, Propan, Isopropanol und der Gemische derselben ausgewählt ist.

6. Verfahren nach Anspruch 4 oder 5, dadurch gekennzeichnet, daß irgendein Überschuß der auf der Oberfläche der getränkten Membran vorhandenen Lösung vor der Verdampfung physikalisch entfernt wird.

7. Verfahren nach Anspruch 5 oder 6, dadurch gekennzeichnet, daß das Tränken in der Weise erfolgt, daß man zunächst das Wasser in der Membran durch ein niedermolekulares Alkanol verdrängt und sodann die Membran mit einer Lösung eines in einem niedermolekularen Alkanol gelösten Polyols tränkt.

8. Verfahren nach Anspruch 5 oder 6, dadurch gekennzeichnet, daß das Tränken in der Weise erfolgt, daß man zunächst das Wasser in der Membran durch eine Lösung von Wasser und des niedermolekularen Alkanols verdrängt, sodann die Lösung von Wasser und des niedermolekularen Alkanols mit reinem Alkanol verdrängt und sodann die Membran mit einer Lösung des in einem niedermolekularen Alkanol gelösten Polyols tränkt.

9. Verfahren nach einem der Ansprüche 4 bis 8, dadurch gekennzeichnet, daß das Polyol aus der Gruppe Glycerin, Propylenglycol, Dipropylenglycol, Tripropylenglycol und höherer Polymere von Propylenglycol, Triäthylenglycol, von Polyäthylenglycolen, die Polymere von Äthylenoxid sind und die allgemeine Formel

$$HO{+}CH_2{-}CH_2{-}O{+}_nH$$

haben, worin n 4 bis 20 bedeutet, von Polymeren von Propylenoxid mit der Formel

$$HO{+}\underset{}{\overset{CH_3}{\overset{|}{C}}}H{-}CH_2{-}O{+}_mH$$

worin m 3 bis 20 bedeutet, von Polyätherglycolen, die Athylenoxid- und Propylenoxideinheiten enthalten, von Methoxyderivaten dieser Polyäthylenglycole, Saccharose und Glucose ausgewählt ist.

Fig. 1

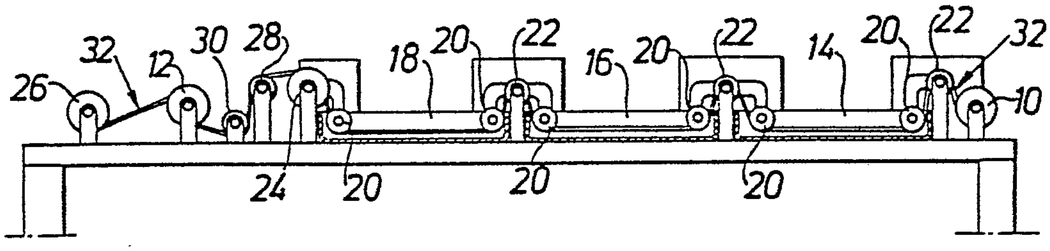

Fig 2

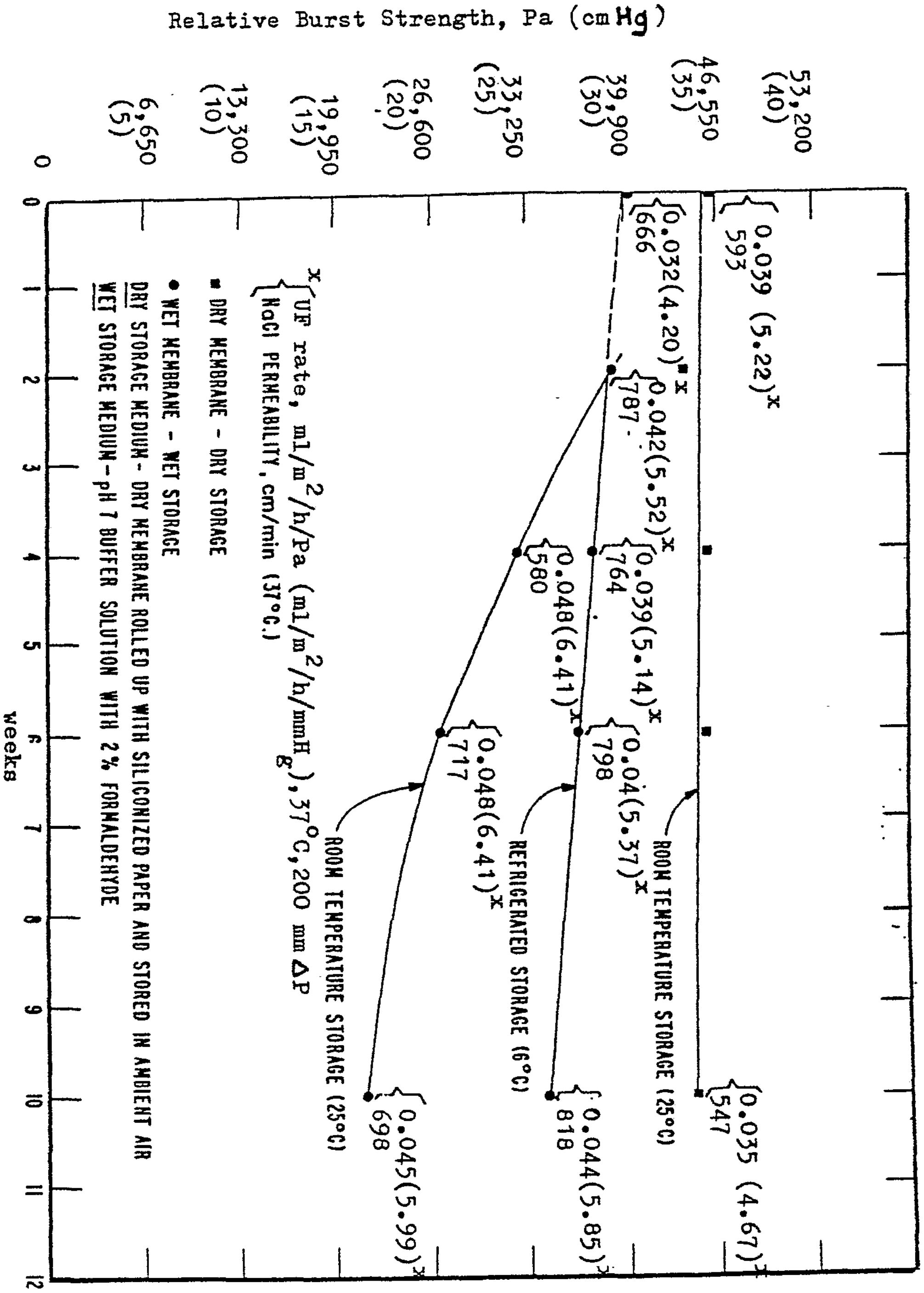
Relative Burst Strength, Pa (cm Hg)
53,200 (40)
46,550 (35)
39,900 (30)
33,250 (25)
26,600 (20)
19,950 (15)
13,300 (10)
6,650 (5)
0
0.039 (5.22)x 593
0.032(4.20)x 666
0.042(5.52)x 787
0.039(5.14)x 764
0.048(6.41)x 580
0.04(5.37)x 798
0.048(6.41)x 717
0.035 (4.67)x 547
0.044(5.85)x 818
0.045(5.99)x 698
ROOM TEMPERATURE STORAGE (25°C)
REFRIGERATED STORAGE (6°C)
ROOM TEMPERATURE STORAGE (25°C)
x UF rate, ml/m2/h/Pa (ml/m2/h/mmHg), 37°C, 200 mm ΔP
NaCl PERMEABILITY, cm/min (37°C.)
■ DRY MEMBRANE - DRY STORAGE
● WET MEMBRANE - WET STORAGE
DRY STORAGE MEDIUM - DRY MEMBRANE ROLLED UP WITH SILICONIZED PAPER AND STORED IN AMBIENT AIR
WET STORAGE MEDIUM - pH 7 BUFFER SOLUTION WITH 2% FORMALDEHYDE
0 1 2 3 4 5 6 7 8 9 10 11 12
weeks